# EUROPÄISCHE PATENTSCHRIFT

(11) **EP 1 902 498 B1**
(45) Veröffentlichungstag und Bekanntmachung des Hinweises auf die Patenterteilung: **07.11.2012**
(21) Anmeldenummer: 06779807.4
(22) Anmeldetag: 30.06.2006
(51) Int. Cl.: H02G 1/12

(54) **VORRICHTUNG UND VERFAHREN ZUM ABISOLIEREN VON KABELN**
DEVICE AND METHOD FOR STRIPPING CABLES
DISPOSITIF ET PROCEDE POUR DENUDER DES CABLES

(30) Priorität: 01.07.2005 CH 11122005; 22.07.2005 US 595636 P
(43) Veröffentlichungstag der Anmeldung: 26.03.2008
(73) Patentinhaber: Schleuniger Holding AG, 3608 Thun (CH)
(72) Erfinder: APPENZELLER, Reto, CH-3661 Uetendorf (CH)
(74) Vertreter: Rosenich, Paul
(86) Internationale Anmeldenummer: PCT/IB2006/001806
(87) Internationale Veröffentlichungsnummer: WO 2007/052095

(56) Entgegenhaltungen:
- US-A1- 2002 029 663

## Beschreibung

Die Erfindung betrifft eine Vorrichtung und ein Verfahren zum Abisolieren von Kabeln (insbesondere elektrischen, aber auch optischen Leitern).

Aus der DE-U-20314835 ist eine Vorrichtung dieser Art bekannt, mittels welcher Rund- und Längsschnitte in der Isolation von Stromleitern ausgeführt werden kann, um die Isolation streckenweise entfernen zu können. Diese Vorrichtung weist ein Gehäuse, Klemmbacken zum Befestigen des zu bearbeitenden Kabelendes, sowie einen, gegen die Isolation des Kabels verstellbaren und rotierenden Schneidkopf mit mindestens einem Messer, und eine Verstelleinheit für eine axiale Einstellung des Schneidkopfes auf. Eine weiterentwickelte Kabelabisolierung ist z. B. aus WO-03100935 gleicher Anmelderin bekannt.

Die US 2002/029663 A1, welche als nächstliegender Stand der Technik angesehen wird, offenbart eine Vorrichtung zum Abisolieren eines Kabels, welche ein Gehäuse, eine Abisolierstation, Klemmbacken zum Festhalten des zu bearbeitenden Kabelendes, sowie einen, gegen die Isolation des Kabels versteilbaren und rotierbarantriebbaren Schneidkopf mit mindestens einem Messer aufweist, und mit einer Verstelleinheit für eine, derjeweiligen Abisolierlange des Kabels entsprechenden axialen Einstellung des Schneidkopfes ausgerüstet ist.

Bei unseren Versuchen haben wir aber festgestellt, dass das rotierende Messer das Kabel auch auf Torsion während des Kabeleinschneidens belastet. Auf das Kabel wirkt dabei ein Drehmoment, welches insbesondere bei dünneren Kabeln dazu führen kann, dass einerseits das Kabel verdrillt, und sich dadurch die Länge des Kabelabschnittes relativ verkürzt, was die Genauigkeit der Abisolierlänge nachteilig beeinflusst; andererseits dadurch eine Zugspannung im Kabel aufbauen kann, welche über Stick-/Slipeffekte zu sogenannten "Rattermarken" (mehreren unsauberen Einschnitten entlang der Kabeloberfläche) auf dem Schirmgeflecht des Kabels führt. Dadurch wird die Produktqualität bedeutend vermindert.

Beim Einschneiden des in den Klemmbacken eingespannten Kabelendes durch das rotierende Messer kann also eine Torsionswirkung im Kabel auftreten, weil das rotierende Messer über die Reibung zwischen dem Messer und dem Kabelmantel eine Torsionskraft auf das freie Kabelende aufbringt. Demzufolge tritt eine relativ kabelaxiale Abkürzung der zu bearbeitenden Abisolierlänge im Verhältnis zum eingestellten Soll-Wert, d. h. im Verhältnis zum eingestellten gegenseitigen Abstand zwischen dem Messer und den Klemmbacken auf.

Wie oben erwähnt, entstehen "Rattenmarken", d. h. Spuren des Messers, welche auf dem Kabel durch das Messer erzeugt werden, wenn es aufgrund der durch die Torsion verkürzten Kabellänge an einer anderen Stelle das Kabel definitiv einschneidet, als an der Stelle, an der es zuerst angesetzt hat. Mit anderen Worten: Bedingt durch die starre Relativanordnung der Klemmbacken und des Messers zueinander, zieht sich das Kabel aufgrund seiner Torsionsverkürzung unter dem Messer durch. Es zwängt sich unter dem eingeschnittenen Messer in Richtung der Verkürzung. Deshalb entstehen also die "Rattenmarken", bzw. unsaubere Schnitte auf dem Kabel.

Der Erfindung liegt die Aufgabe zugrunde, eine verbesserte Abisolierungslösung zu schaffen, durch welche die obigen Nachteile des Standes der Technik bedeutend reduziert, bzw. eliminiert werden können, d. h. das das Schirmgeflecht und die Isolation auch bei dünnen Kabeln mit höherer Präzision und Arbeitsqualität entfernt werden kann.

Die gestellte Aufgabe wird durch die Merkmale der Hauptansprüche 1 und 7 in überraschend umfangreichem Maße gelöst. Vorteilhafte Weiterentwicklungen der Erfindung sind in den abhängigen Ansprüchen angegeben.

Das Wesen der Erfindung wird nun darin gesehen, dass die Klemmbacken und/oder das Messer und/oder der Schneidkopf und/oder die axiale Verstelleinheit des Schneidkopfes im Gehäuse so angeordnet sind, dass innerhalb des - gemäß der jeweiligen Abisolierlänge eingestellten - gegenseitigen Abstandes zwischen dem Messer und den Klemmbacken in kabelaxialer Richtung ein Spiel vorgesehen ist, welches unabhängig von der Verstelleinheit des Schneidkopfes eine geringfügige kabelaxiale Bewegung der Klemmbacken und/oder des Messers und/oder des Schneidkopfes und/oder der Verstelleinheit des Schneidkopfes erlaubt.

Um die oben erwähnten nachteiligen Wirkungen beim Stand der Technik zu eliminieren, wird also erfindungsgemäß der Abstand zwischen dem Messer und den Klemmbacken um ein kabelaxiales Spiel nur nötigenfalls verkürzt, dessen maximale Breite vorzugsweise voreinstellbar ist. Dies ist eine unwillkürliche Verstellung, z. B. aufgrund einer elastischen Lagerung des Messers und der Klemmbacken in Axialrichtung relativ zueinander.

Gemäß der Erfindung vermindert sich dieser Spalt also unwillkürlich und genau um die Länge des Spieles, das durch das Kabel vorgegeben wird, welches sich aufgrund der Torsionswirkung verkürzt. Die Hauptsache bei der Erfindung ist: Eine bedarfsabhängige Veränderung des Abstandes zwischen dem Messer und den Klemmbacken in Abhängigkeit von der Kabellängenreduktion bedingt durch die Torsion.

Die erreichbaren wichtigsten Vorteile der Erfindung sowie weitere Details sind nachstehend in der Figurenbeschreibung zu finden.

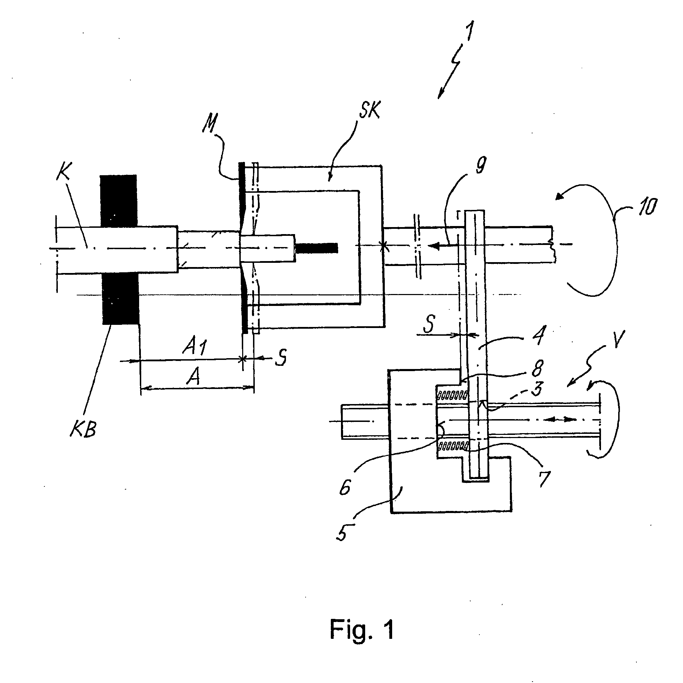

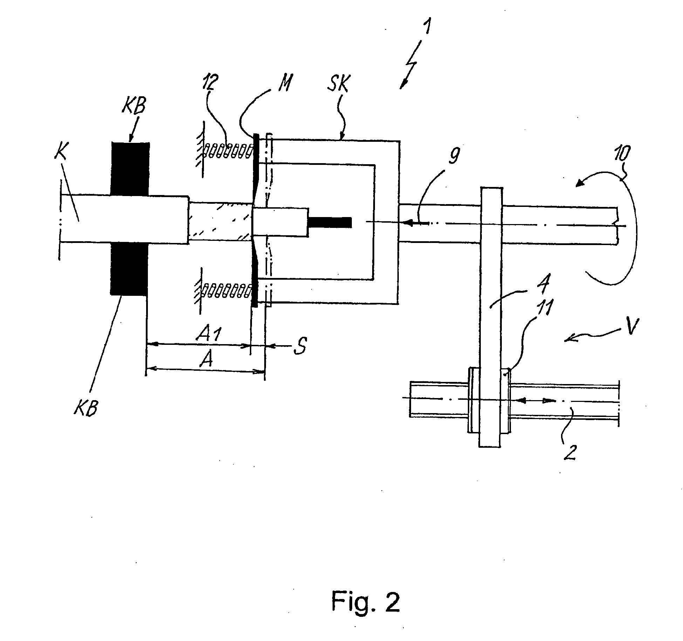

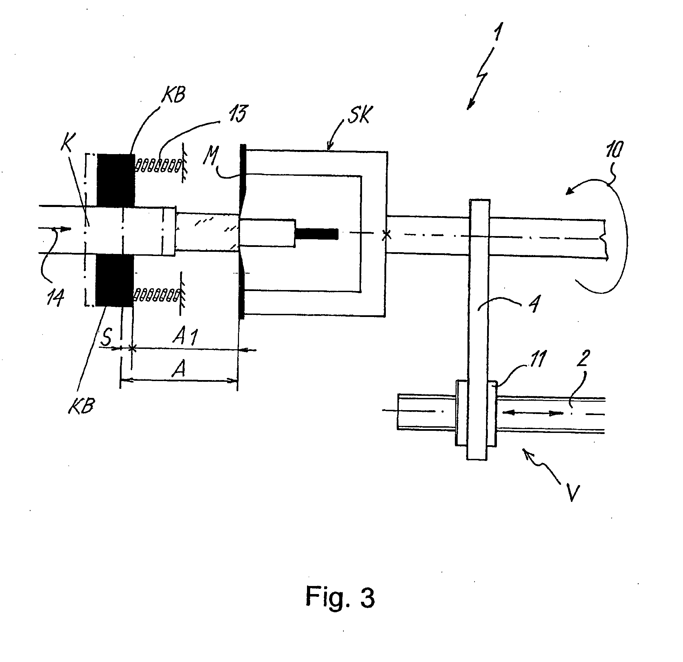

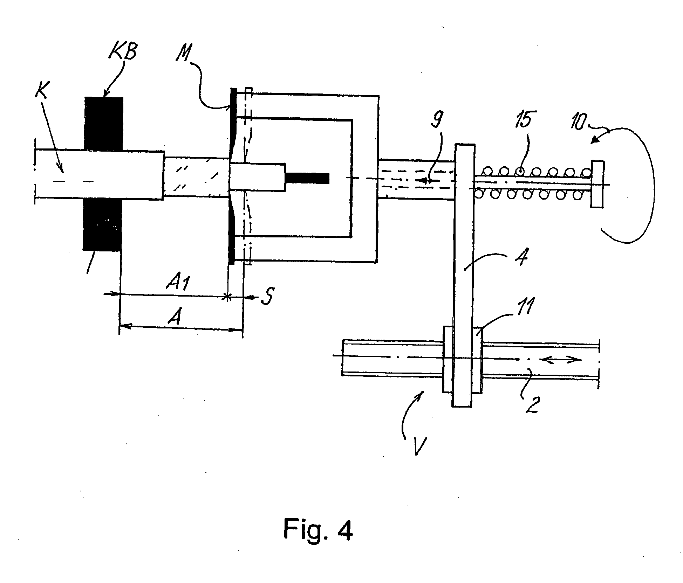

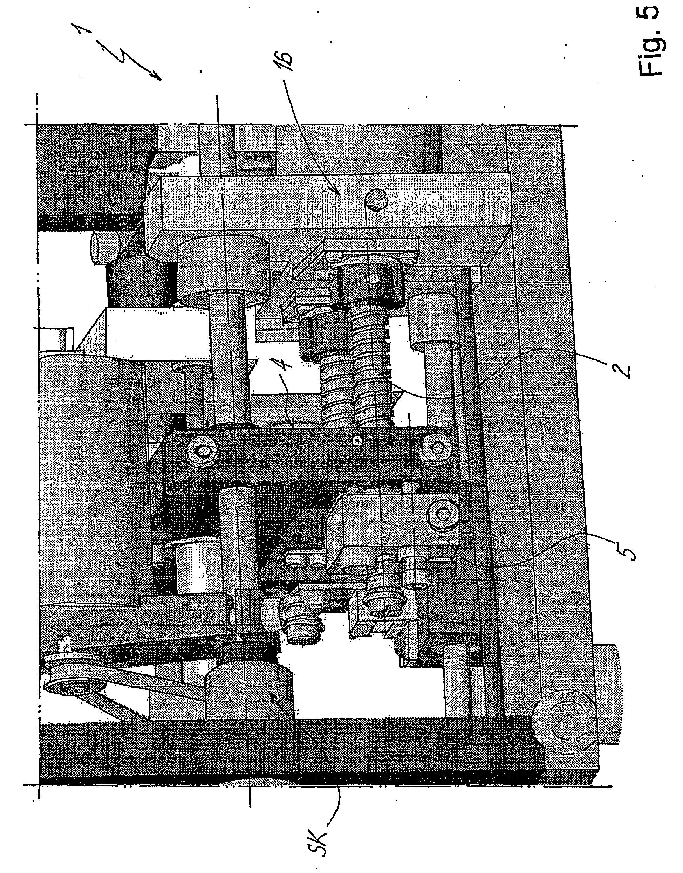

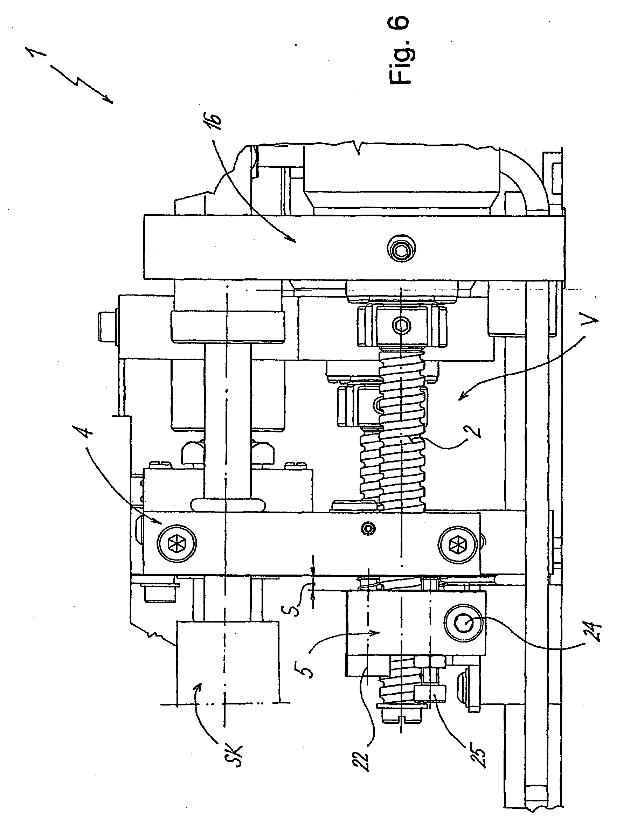

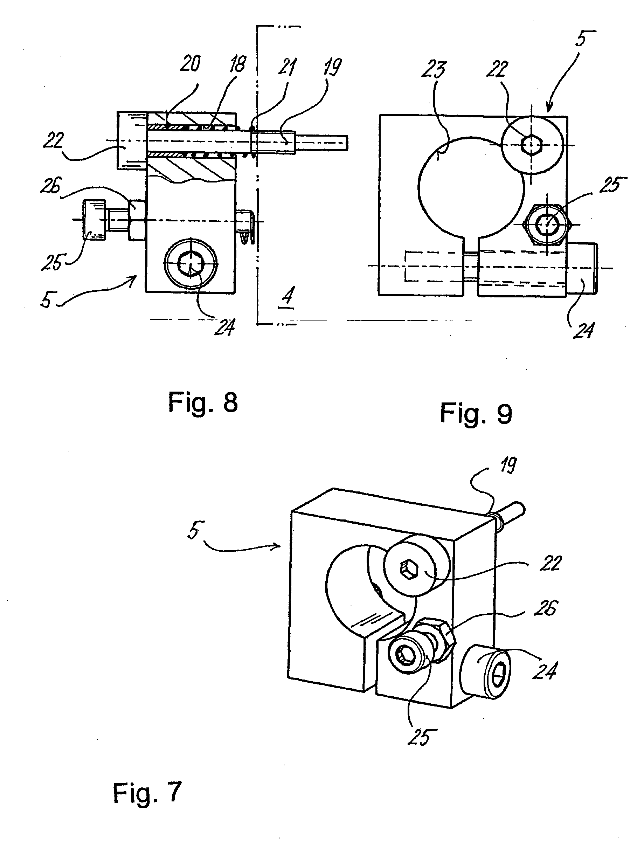

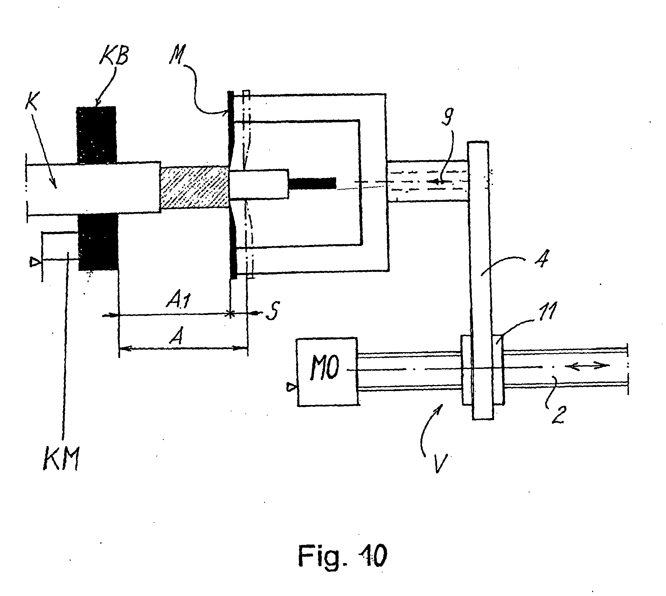

Die Erfindung wird nachstehend näher anhand der beiliegenden Zeichnungen erläutert, welche einige Ausführungsbeispiele illustrieren. Es zeigen:
● Fig. 1 ein Anordnungsschema des ersten Ausführungsbeispieles der erfindungsgemäßen Abisoliervorrichtung mit gefederter Schneidkopf-Verstelleinheit,
● Fig. 2 ein Schema des zweiten Ausführungsbeispieles der erfindungsgemäßen Abisoliervorrichtung mit gefedertem Messer,
● Fig. 3 ein Schema des dritten Ausführungsbeispieles der erfindungsgemäßen Abisoliervorrichtung mit gefederten Klemmbaken,
● Fig. 4 ein Schema des vierten Ausführungsbeispieles der erfindungsgemäßen Abisoliervorrichtung mit gefedertem Schneidkopf,
● Fig. 5 perspektivisches Bild einer Variante der Lösung gemäß Fig. 1,
● Fig. 6 Seitenansicht der Anordnung nach Fig. 5,
● Fig. 7 perspektivisches Bild eines Teiles von Fig. 6,
● Fig. 8 Seitenansicht des Mutterblocks gemäß Fig. 7, teilweise ausgebrochen,
● Fig. 9 Stirnansicht des Mutterblocks gemäß Fig. 8 und
● Fig. 10 eine Variante des Aufbaus nach Fig. 4 mit einer Zwangsfolgesteuerung für den Schneidkopf.

In den Figuren sind die ähnlichen oder äquivalenten Einzelheiten mit gleichen Bezugszeichen bezeichnet.

In Figuren 1-4 sind nur die zur Erläuterung der Erfindung wichtigsten Elemente der Abisolierstation einer Abisoliervorrichtung 1 schematisch zu sehen. Hier sind ein zu bearbeitendes Kabel mit Bezugszeichen K, das Kabel fixierende Klemmbacken mit KB, ein Messer mit M, ein rotierender und das Messer tragender Schneidkopf mit SK, ein voreingestellter Abstand (Soll-Wert) zwischen dem Messer M und den Klemmbacken KB mit A, eine axiale Verstelleinheit des Schneidkopfes SK mit V, ein relativ axialer abgekürzter Abstand des Kabelendes mit A1, und ein kabelaxiales Spiel zum Kompensieren der Kabelabkürzung mit S bezeichnet.

Wie oben erwähnt, liegt das Wesen der vorliegenden Erfindung darin, dass während des Einschneidens der voreingestellte gegenseitige Abstand A zwischen dem Messer M des Schneidkopfes SK und den Klemmbacken K um ein kabelaxiales Spiel S vermindert (Abstand A1) wird, um die sich während des Einschneidens wegen der Torsionswirkung des Messers M aufbauende Zugbelastung des Kabels K einerseits abzubauen, und andererseits die relativ kabelaxiale Abkürzung der zu bearbeitenden Abisolierlänge zu kompensieren.

Demgemäß sind die Klemmbacken K und/oder der Messer M und/oder der Schneidkopf SK und/oder die axiale Verstelleinheit V des Schneidkopfes im Gehäuse nach der Erfindung so angeordnet, dass innerhalb des - gemäß der jeweiligen Abisolierlänge eingestellten - gegenseitigen Abstandes A zwischen dem Messer M und den Klemmbacken K in kabelaxialer Richtung ein kompensierendes Spiel S vorgesehen ist, das unabhängig von der Verstelleinheit V des Schneidkopfes nötigenfalls eine geringfügige kabelaxiale Bewegung der Klemmbacken KB und/oder des Messers M selbst und/oder des Schneidkopfes SK und/oder der Verstelleinheit V des Schneidkopfes erlaubt.

In Fig. 1 ist das erste Ausführungsbeispiel der erfindungsgemäßen Abisoliervorrichtung 1 mit gefederter Verstelleinheit V des Schneidkopfes SK dargestellt. Bei dieser Lösung wird das kabelaxiale kompensierende Spiel S durch die gefederte Anordnung der Verstelleinheit V vorgesehen ist. Das Kabel K ist in Klemmbacken KB in bekannter Weise so eingespannt, dass das freie Kabelende frei bearbeitbar ist.

Die angetriebene Verstelleinheit V des Schneidkopfes SK weist ein Stellglied auf, welches hier als eine Stellspindel 2 ausgebildet ist. Die Stellspindel 2 ist durch eine Öffnung 3 eines Halteblockes 4 frei hindurchgeführt, welcher den Schneidkopf SK - zusammen mit dem Messer M - beim Einstellen der vorbestimmten Abisolierlänge in an sich bekannter Weise in axialer Richtung mitnimmt. Die angetriebene Stellspindel 2 ist mit einem Gegenstück, z. B. mit einem Mutterblock 5 (mithilfe einer nicht dargestellten Gewindebohrung oder Mutter) verbunden.

Der Mutterblock 5 ist so ausgebildet, dass eine limitierte axiale Bewegung für den Halteblock 4 nach dem axialen Spiel S ermöglicht. In einer Ausnehmung 6 des Mutterblockes 5 ist mindestens eine Stützfeder 7 angeordnet, welche den Halteblock 4 vom Mutternblock 5 mit dem Spiel S entfernt hält (das ist die Position des Mutternblockes 5, in welcher der Schneidkopf SK durch den Vortrieb der Stellspindel 2 zugestellt wurde). Der Mutterblock 5 ist in Fig. 1 mit einem axialen Anschlagbund 8 versehen, welcher die maximale axiale Bewegung des Halteblockes 4 gegenüber der Federkraft limitiert.

In Fig. 1 ist die eingestellte Grundstellung des Halteblocks 4 mit kontinuierlicher Linie, aber die Grundstellung des Messers M (mit Abstand A) mit strichpunktierter Linie. Die mit dem Spiel S kompensierten Stellungen (Abstand A1) deren sind aber umgekehrt bezeichnet. In der kompensierten Stellung stützt sich der Halteblock 4 am Anschlagbund 8 des Mutterblockes 5 nach seiner axialen Bewegung um das Spiel S in Richtung eines Pfeils 9. Der Schneidkopf SK ist mit einem Drehantrieb versehen, welcher schematisch mit einem Pfeil 10 bezeichnet ist.

In Fig. 2 ist eine zweite Ausführungsform der Abisoliervorrichtung 1 nach der Erfindung schematisch dargestellt, bei welcher das kabelaxiale kompensierende Spiel S durch die gefederte Anordnung des Messers M vorgesehen ist.

Die Verstelleinheit V des Schneidkopfes SK unterscheidet sich von der Anordnung nach Fig. 1 nun darin, dass die angetriebene Stellspindel 2 durch eine Mutter 11 direkt mit dem Halteblock 4 zum voreingestellten axialen Verschieben des Schneidkopfes SK verbunden ist.

Ein weiterer Unterschied in Fig. 2 (im Verhältnis zu Fig. 1) besteht darin, dass hier das Messer M selbst durch eine Stützfeder 12 gegenüber den Klemmbacken KB gestützt ist. In Fig. 2 ist das Messer M in seiner voreingestellten Grundstellung (mit einem Abstand A von den Klemmbacken KB) mit strichpunktierter Linie, jedoch in seiner, mit dem Spiel S kompensierten Arbeitsstellung (siehe Abstand A1) nach kabelaxialer Bewegung um das Spiel S in Richtung des Pfeils 9 - gegenüber der Federkraft - mit kontinuierlicher Linie bezeichnet.

Fig. 3 zeigt eine dritte Variante der Abisoliervorrichtung 1 nach der Erfindung, bei welcher das kabelaxiale kompensierende Spiel S durch die gefederte Anordnung der Klemmbacken KB vorgesehen ist. Dazu sind die Klemmbacken KB von rechts (in Fig. 3) durch Stützfeder 13 gegenüber dem Messer M gestützt. Die Anordnung des Schneidkopfs SK (zusammen mit dem Messer M) und der Verstelleinheit ist wie in Fig. 2.

Die eingestellte Grundstellung (Fig. 3) der Klemmbacken KB in einem Abstand A vom Messer M ist mit strichpunktierter Linie, jedoch die kompensierte Arbeitsstellung der Klemmbacken KB (Abstand A1) nach kabelaxialer Bewegung der Klemmbacken KB um das axiale Spiel S in Richtung des Pfeils 14 - gegenüber der Federkraft - mit kontinuierlicher Linie bezeichnet.

Fig. 4 zeigt ein viertes Ausführungsbeispiel der Abisoliervorrichtung 1 nach der Erfindung, bei welcher das kabelaxiale kompensierende Spiel S durch die gefederte Anordnung des Schneidkopfes SK vorgesehen ist. Dazu ist der angetriebene Schneidkopf SK (Pfeil 10) gegenüber dem Halteblock 4 in axialer Richtung relativ verschiebbar gelagert, und durch eine Stützfeder 15 gestützt. Diese gefederte Anordnung des Schneidkopfes SK ermöglicht eine kabelaxiale kompensierende Bewegung für den Schneidkopf SK und dem Messer M - gegenüber der Federkraft - in Richtung des Pfeils 9 um das Spiel S relativ zur Verstelleinheit V des Schneidkopfes SK (d. h. relativ zum Halteblock HB).

Die eingestellte Grundstellung des Schneidkopfes SK mit dem Messer M in einem Abstand A von den Klemmbacken KB ist mit strichpunktierter Linie, jedoch die kompensierte Arbeitsstellung des Messers M mit dem Schneidkopf SK (Abstand A1) nach seiner kabelaxialen Bewegung um das axiale Spiel S in Richtung des Pfeils 9 - gegenüber der Federkraft - mit kontinuierlicher Linie bezeichnet.

In Figuren 5 bis 9 eine konkrete Ausführungsvariante der Abisoliervorrichtung 1 gemäß Fig. 1 ist dargestellt. In Figuren 5 und 6 sind die wichtigsten Elemente zu sehen, d. h. der angetriebene Schneidkopf SK, die axiale Verstelleinheit V des Schneidkopfes SK mit der angetriebenen Stellspindel 2, dem Halteblock 4 und dem Mutterblock 5. Hier ist auch das Gehäusegestell 16 der Vorrichtung 1 teilweise gezeigt.

Wie es in Zusammenhang mit Fig. 1 schon erklärt wurde, ist der Halteblock 4 relativ zum Mutterblock 5 in Richtung des Pfeils 17 (Fig. 6) um das Spiel S bewegbar angeordnet. Der Mutterblock 5 ist also so ausgebildet, dass eine limitierte axiale Bewegung (Spiel S) für den Halteblock 4 ermöglicht wird. Die Einzelheiten des Mutterblocks 5 sind in Figuren 7-9 gezeigt.

In einer Bohrung 18 des Mutterblockes 5 ist eine Schraube 19 angeordnet, welche mit einer koaxialen Anschlaghülse 20 und einer Stützfeder 21 versehen ist (Fig. 8). Die Stützfeder 21 drückt den Mutterblock 5 auf einen Schraubenkopf 22 der Schraube 19 (wenn das Ende der Schraube 19 in eine, hier nicht dargestellte Gewindebohrung des Halteblockes 4 eingeschraubt ist, siehe Fig. 8). Das ist die Position, in die der Schneidekopf SK durch die axiale Verstelleinheit V zugestellt wurde (Fig. 6).

In Fig. 9 hat der Mutterblock 5 eine Ausnehmung 23, in welcher die mit der Stellspindel 2 zusammenwirkende Mutter (nicht gezeigt) durch eine Spannschraube 24 festgeklemmt werden kann. Anstelle der Mutter kann gegebenenfalls ein Gewinde in der Ausnehmung 23 angewendet werden. Der Mutterblock 5 weist noch eine Anschlagschraube 25 auf, mit welcher das axiale Spiel S einstellbar begrenzt wird (Fig. 6).

Dieses axiale Spiel S (das der Schneidkopf SK hat) ergibt sich aus dem Abstand vom Halteblock 4 zum Mutterblock 5, der mit der Schraube 19 eingestellt werden kann, sowie aus dem Abstand von der Spitze der Anschlagschraube 25 zum Halteblock 4. In der eingestellten Lage kann die Anschlagschraube 25 durch eine Kontermutter 26 fixiert werden (Fig. 8).

Es ist zu bemerken, das gegebenenfalls selbst diese Mutter in der Ausnehmung 23 des Mutterblockes 5, z. B. in einem Gummilager gelagert werden kann, und auch dadurch ist das kabelaxiale kompensierende Spiel S zwischen dem Messer M und den Klemmbacken KB einfach vorgesehen.

Die Abisoliervorrichtung 1 nach der Erfindung kann universal für verschiedenste Kabel, insbesondere für extra dünne Kabel eingesetzt werden.

Der Fachmann wird ausdrücklich auf die, an sich bekannten Steuerungsvorrichtungen, Antriebe und Sensoren in der Abisoliertechnik verwiesen, wie sie in der Literatur hinreichend offenbart sind. Deshalb muss hier nicht im Detail darauf eingegangen werden (siehe z. B. WO-03100935 der Anmelderin). In einer - vorzugsweise programmierbaren - Steuerung der Abisoliervorrichtung 1 kann, z. B. ein Speicher vorgesehen sein, in dem eine Kabelliste angelegt ist, welche Informationen über die Kabel enthält, und diese Informationen direkt für die Ansteuerung der Abisoliermaschine verwendet werden können.

Das Messer M schneidet unterschiedliche Schichten eines koaxial aufgebauten Kabels K in unterschiedlichen Tiefen und gegebenenfalls in unterschiedlichen Abständen vom Kabelende ein (siehe Figuren 1 bis 4).

Bei unseren Versuchen verwendeten wir ein Kabel K (Typ: Mikrokoaxialkabel "AWG40") als Testkabel, bei welchem der Außendurchmesser der Isolation 0,4 mm, die Einschneidedurchmesser auf den Schirm 0,3 mm, auf das Dielektrikum 0,19 mm, und auf den Leiter 0.14 mm beträgt. Die Abisolierlängen betragen jeweils 9, 5, bzw. 2mm. Als optimaler axialer Längsausgleich des Kabels K (d.h. das Spiel S) gemäß der Erfindung hat sich in diesem Falle 0,15 mm erwiesen, welcher mit überraschend hoher Präzision und Arbeitsqualität verbunden ist.

Es ist zu bemerken, dass auch eine motorische kabelaxiale Verstellung gemäß dem Spiel S mithilfe einer zusätzlichen Verstellvorrichtung (nicht dargestellt) denkbar wäre. Sie sollte jedoch völlig unabhängig von der Verstelleinheit V des Schneidkopfes SK arbeiten. Diese Ausführungsform ist schematisch in Fig. 10 dargestellt. Fig. 10 setzt an bei dem Aufbau des Gegenstandes der Fig. 4. Zusätzlich sind die Klemmbacken KB gegenüber dem Maschinenchassis mittels einer Kraftmesseinrichtung KM abgestützt. Diese kann herkömlichen Aufbau haben und dient der Erfassung einer Zugkraft auf die Klemmbacken KB. Eine solche Zugkraft entsteht typischerweise beim Verdrillen eines Kabels unter der Twistwirkung der Schneidemesser M beim rotativen Einschneiden.

In Abhängigkeit von der Zugkraft oder Zugkraftänderung kann nun die Kraftmesseinrichtung KM einen Antrieb MO ansteuern, der ebenfalls chassisgestützt ist. Dieser Antrieb MO verfährt die Schneidmesser M über die Spindel 2 in Kabelaxialrichtung, um die Zugkraft zu reduzieren. Es handelt sich dabei entweder um eine Impulssteuerung, d.h. der Antrieb MO dreht die Spindel 2 um einen vorgegebenen Wert (vorzugsweise S), oder um einen geregelte Steuerung, d.h. der Antrieb MO dreht die Spindel 2 so lange und immer wieder, bis die Zugkraft wieder unter einen bestimmten Wert fällt.

Der Antrieb MO ist vorzugsweise der gleiche Antrieb, der auch schon beim Aufbau gemäss Fig. 4 für die Verstellung der Schneidmesser M zuständig war. Es kann sich dabei aber auch um einen zusätzlichen Antrieb handeln, der mit besagtem Antrieb mechanisch in Serie geschaltet ist.

Entscheidend für diese erfinderische Weiterbildung ist, dass die Zugkraft nicht durch Federkraft kompensiert wird sondern durch willkürliches (gesteuertes) Verfahren der Schneidmesser.

Selbstverständlich beinhaltet dieser Gedanke auch einen alternativen Aufbau, bei dem die Haltebacken HB willkürlich (und gesteuert) verschoben werden können, um die Zugspannung abzubauen.

Während der Versuche haben wir beobachtet, dass die Einschneidegeschwindigkeit einen großen Einfluss auf das Verdrillverhalten des Kabels K hat. Bei unserem Prototyp kann der Bediener deshalb die Einschneidgeschwindigkeit (Zustellgeschwindigkeit) des Messers M in einem doppelt so breiten Bereich variieren, als bisher. Das heisst, die Bearbeitungsgeschwindigkeit kann gegenüber herkömmlichen Abisoliervorrichtungen erhöht werden.

Durch die vorgängig beschriebenen Kombination von Merkmalen werden die nachstehenden Verbesserungen erreicht: Es wird eine kompakte Abisoliervorrichtung 1 geschaffen; sie arbeitet hochpräzise und ermöglicht insbesondere hinsichtlich der Abisolierlänge und -tiefe eine verbesserte Genauigkeit. Durch die Erfindung kann man - trotz der Torsionswirkung - praktisch die Soll-Abisolierlänge mit hoher Präzision erreicht, ohne Kabelbeschädigungen, ohne "Rattenmarken", und auch insbesondere bei sehr dünnen Kabeln, was bisher in der Praxis unmöglich war.

Die Erfindung ist selbstverständlich nicht auf die dargestellten und beschriebenen Ausführungsbeispiele beschränkt. Auch weitere Ausführungsformen und Kombinationen sind denkbar innerhalb des beanspruchten Schutzumfanges.

## Patentansprüche

1. Vorrichtung zum Abisolieren eines Kabels, welche ein Gehäuse, eine Abisolierstation, Klemmbacken zum Festhalten des zu bearbeitenden Kabelendes, sowie einen, gegen die Isolation des Kabels verstellbaren und rotierbar antriebbaren Schneidkopf mit mindestens einem Messer aufweist, und mit einer Verstelleinheit für eine, der jeweiligen Abisolierlänge des Kabels entsprechenden axialen Einstellung des Schneidkopfes ausgerüstet ist, **dadurch gekennzeichnet, dass** die Klemmbacken (K) und/oder das Messer (M) und/oder der Schneidkopf (SK) und/oder die axiale Verstelleinheit (V) des Schneidkopfes (SK) im Gehäuse so angeordnet ist/sind, dass innerhalb des - gemäß der jeweiligen Abisolierlänge eingestellten- gegenseitigen Abstandes (A) zwischen dem Messer (M) und den Klemmbacken (K) in kabelaxialer Richtung ein Spiel (S) vorgesehen ist, das unabhängig von der Verstelleinheit (V) des Schneidkopfes eine geringfügige kabelaxiale Bewegung der Klemmbacken (K) und/oder des Messers (M) und/oder des Schneidkopfes (SK) und/oder der Verstelleinheit (V) des Schneidkopfes erlaubt.

2. Vorrichtung nach Anspruch 1, **dadurch gekennzeichnet, dass** die Klemmbacken (K) und/oder das Messer (M) und/oder der Schneidkopf (SK) und/oder die Verstelleinheit (V) des Schneidkopfes gegenüber dem Gehäuse in kabelaxialer Richtung elastisch gelagert sind/ist.

3. Vorrichtung nach Anspruch 2 oder 3, **dadurch gekennzeichnet, dass** das Spiel (S) vorzugsweise mithilfe mindestens einer Anschlagschraube (25) einstellbar ist.

4. Vorrichtung nach einem der vorhergehenden Ansprüche, **dadurch gekennzeichnet, dass** sie mindestens eine, dem axialen Spiel (S) entgegenwirkende Stützfeder (7; 12; 13; 15; 21) aufweist.

5. Vorrichtung nach einem der vorhergehenden Ansprüche, **dadurch gekennzeichnet, dass** die Verstelleinheit (V) des Schneidkopfes (SK) ein Stellglied, vorzugsweise eine Stellspindel (2) aufweist, welche mit einem Gegenstück, vorzugsweise einer Mutter in kraftübertragender Verbindung steht, wobei ein Spiel (S) zwischen dem Gegenstück und der Stellspindel (2), oder zwischen der Stellspindel (2) oder dem Gegenstück sowie dem Gehäuse vorgesehen ist.

6. Vorrichtung nach Anspruch 5, **dadurch gekennzeichnet, dass** im Gehäuse ein Halteblock (4) für die Verstelleinheit (V) vorgesehen ist, der den Schneidkopf (SK) trägt, wobei der Halteblock (4) eine Öffnung (3) zum freien Durchführen der Stellspindel (2) von Verstelleinheit (V) hat; und dass dem Halteblock (4) ein Mutterblock (5) zugeordnet ist, welcher mit der Stellspindel (2) verbunden ist, wobei das einstellbare Spiel (S) in der Verstelleinheit (V) zwischen dem Mutterblock (5) und dem Halteblock (4) ausgebildet ist.

7. Verfahren zum Abisolieren eines Kabels, bei welchem mindestens ein Kabelende in einer Abisolierstation positioniert und durch Klemmbacken fixiert wird, und die Isolation des Kabels durch mindestens einem Messer eines rotierbar antriebbaren Schneidkopfes in einer vorbestimmten Länge und Tiefe entfernt (abisoliert) wird, **dadurch gekennzeichnet, dass** während des Abisolier-Einschneidens der voreingestellte gegenseitige Abstand (A) zwischen dem Messer (M) des Schneidkopfes (SK) und den Klemmbacken (K) um ein kabelaxiales Spiel (S) vermindert (A1) wird, um die sich während des Einschneidens wegen der Torsionswirkung des Messers (M) aufbauende Zugbelastung des Kabels (K) einerseits abzubauen, und andererseits die relativ kabelaxiale Abkürzung der zu bearbeitenden Abisolierlänge zu kompensieren.

8. Verfahren nach Anspruch 7, **dadurch gekennzeichnet, dass** die Einschneidegeschwindigkeit in Kombination mit dem Längsausgleich des Kabels (K) durch das Spiel (S) bestimmt und/oder variiert wird.

9. Verfahren nach Anspruch 7 oder 8, **dadurch gekennzeichnet, dass** das kabelaxiale Spiel (S) durch eine vorbestimmte axiale Bewegung des Schneidkopfes (SK) in Richtung der Klemmbacken (KB) gebildet wird.

10. Verfahren nach einem der Ansprüche 7-9, **dadurch gekennzeichnet, dass** der gegenseitige Abstand (A) zwischen dem Messer (M) und den Klemmbacken (KB) um das kabelaxiale Spiel (S) selbsttätig vermindert wird.

11. Verfahren nach einem der Ansprüche 7-9, **dadurch gekennzeichnet, dass** der gegenseitige Abstand (A) zwischen dem Messer (M) und den Klemmbacken (KB) während des Einschneidprozesses um das kabelaxiale Spiel (S) motorisch durch einen Antrieb (MO) - gegebenenfalls gesteuert über eine Kraftmesseinrichtung (KM) - vermindert wird.

## Claims

1. A device for removing insulation from a cable, which device comprises a housing, an insulation stripping station, clamping jaws for holding the cable end to be processed, as well as a cutting head that is adjustable relative to the insulation of the cable and that is rotatably drivable, with at least one cutter and with an adjustment unit for an axial setting of the cutting head, which axial setting corresponds to the respective stripping length of the cable, **characterised in that** the clamping jaws (K) and/or the cutter (M) and/or the cutting head (SK) and/or the axial adjustment unit (V) of the cutting head (SK) are/is arranged In the housing in such a manner that within the mutual distance (A), set according to the respective stripping length, between the cutter (M) and the clamping jaws (K) in axial direction of the cable some play (S) is provided that irrespective of the adjustment unit (V) of the cutter allows slight movement of the clamping jaws (K) and/or of the cutter (M), and/or of the cutting head (SK) and/or of the adjustment unit (V) of the cutting head, in axial direction of the cable.

2. The device according to claim 1, **characterised in that** the clamping jaws (K) and/or the cutter (M) and/or the cutting head (SK) and/or the adjustment unit (V) of the cutting head are/is held elastically relative to the housing in axial direction of the cable.

3. The device according to claim 1 or 2, **characterised in that** the play (S) is preferably settable by means of at least one stop screw (25).

4. The device according to any one of the preceding claims, **characterised in that** it comprises at least one support spring (7; 12; 13; 15; 21) that counteracts the axial play (S).

5. The device according to any one of the preceding claims, **characterised in that** the adjustment unit (V) of the cutting head (SK) comprises an actuator, preferably an actuator spindle (2) that is in force-transmitting connection with a counterpart, preferably a nut, wherein some play (5) is provided between the counterpart and the actuator spindle (2) or between the actuator spindle (2) or the counterpart and the housing.

6. The device according to claim 5, **characterised in that** in the housing a supporting block (4) for the adjustment unit (V) is provided, which supporting block (4) carries the cutting head (SK), wherein the supporting block (4) has an opening (3) for unrestricted feed-through of the actuator spindle (2) of the adjustment unit (V); and **In that** a mother block (5) is associated with the supporting block (4), which mother block (5) is connected to the actuator spindle (2), wherein the settable play (S) in the adjustment unit (V) forms between the mother block (5) and the supporting block (4).

7. A method for removing insulation from a cable, in which method at least one cable end is positioned in an insulation stripping station and is fixed by means of clamping jaws, and the insulation of the cable is removed (stripped) to a predetermined length and depth by at least one cutter of a rotatably drivable cutting head, **characterised in that** during insulation-stripping cutting the preset mutual distance (A) between the cutter (M) of the cutting head (SK) and the clamping jaws (K) is reduced (A1) by play (5) in axial direction of the cable in order to on the one hand reduce the tensile load on the cable (K), which tensile load builds up during cutting, because of the torsional effect of the cutter (M), and on the other hand compensate for the relative shortening, in axial direction of the cable, of the stripping length to be processed.

8. The method according to claim 7, **characterised in that** the cutting speed in combination with the longitudinal compensation of the cable (K) is determined and/or varied by the play (S).

9. The method according to claim 7 or 8, **characterised in that** the play (S) In axial direction of the cable is formed by a predetermined axial movement of the cutting head (SK) In the direction of the clamping jaws (KB).

10. The method according to any one of claims 7-9, **characterised in that** the mutual distance (A) between the cutter (M) and the clamping jaws (KB) is automatically reduced by the play (S) in axial direction of the cable.

11. The method according to any one of claims 7-9, **characterised in that** during the cutting process the mutual distance (A) between the cutter (M) and the clamping jaws (KB) is reduced, by means of a motor drive (MO), by the play (S) in axial direction of the cable, where appropriate controlled by way of a force measuring device (KM).

## Revendications

1. Dispositif de dé-isolation d'un câble, qui présente un boîtier, un poste de dé-isolation, des mâchoires de serrage pour maintenir le bout de câble à traiter, de même qu'une tête de coupe réglable par rapport à l'isolation du câble, pouvant être entraînée en rotation, comportant au moins une lame et équipée d'une unité de réglage pour un réglage axial correspondant à la longueur respective de dé-isolation du câble de la tête de coupe, **caractérisé en ce que** les mâchoires de serrage (K) et/ou la lame (M) et/ou la tête de coupe (SK) et/ou l'unité de réglage axial (V) de la tête de coupe (SK) est(sont) disposé(s) dans le boîtier de manière à ce qu'il soit prévu, dans la distance mutuelle (A) - réglée suivant la longueur de dé-isolation respective - entre la lame (M) et les mâchoires de serrage (K), dans le sens axial par rapport au câble, un jeu (S) qui permet, indépendamment de l'unité de réglage (V) de la tête de coupe, un léger mouvement axial par rapport au câble des mâchoires de serrage (K) et/ou de la lame (M) et/ou de la tête de coupe (SK) et/ou de l'unité de réglage axial (V) de la tête de coupe.

2. Dispositif selon la revendication 1, **caractérisé en ce que** les mâchoires de serrage (K) et/ou la lame (M) et/ou la tête de coupe (SK) et/ou l'unité de réglage axial (V) de la tête de coupe est(sont) en appui élastique dans le sens axial par rapport au câble en face du boîtier.

3. Dispositif selon la revendication 1 ou 2, **caractérisé en ce que** le jeu (S) est réglable de préférence au moyen d'au moins une vis de butée (25).

4. Dispositif selon une des revendications précédentes, **caractérisé en ce qu'**il présente au moins un ressort d'appui (7 ; 12 ; 13 ; 15 ; 25 ; 21) contrecarrant le jeu axial (S).

5. Dispositif selon une des revendications précédentes, **caractérisé en ce que** l'unité de réglage (V) de la tête de coupe (SK) présente un élément de réglage, de préférence une broche de réglage (2) qui est en liaison de transmission de force avec une pièce conjuguée, de préférence un écrou, un jeu (S) étant prévu entre la pièce conjuguée et la broche de réglage (2) ou entre la broche de réglage (2) ou la pièce conjuguée et le boîtier.

6. Dispositif selon la revendication 5, **caractérisé en ce qu'**il est prévu dans le boîtier pour l'unité de réglage (V) un bloc de retenue (4) qui supporte la tête de coupe (SK), le bloc de retenue (4) ayant un orifice (3) pour permettre le passage libre de la broche de réglage (2) de l'unité de réglage (V) et qu'est associé au bloc de retenue (4) un bloc écrou (5) qui est relié à la broche de réglage (2), le jeu réglable (S) étant établi dans l'unité de réglage (V) entre le bloc écrou (5) et le bloc de retenue (4).

7. Procédé de dé-isolation d'un câble, dans lequel au moins un bout de câble est positionné dans un poste de dé-isolation et fixé par des mâchoires de serrage et l'isolation du câble est retirée (dé-isolation) par au moins une lame d'une tête de coupe pouvant être entraînée en rotation sur une longueur et une profondeur prédéfinies, **caractérisé en ce que**, pendant la coupe de dé-isolation, la distance mutuelle préétablie (A) entre la lame (M) de la tête de coupe (SK) et les mâchoires de serrage (K) est réduite (A1) à raison d'un jeu (S) axial par rapport au câble afin, d'une part, de mettre fin à la sollicitation de traction du câble (K) s'installant pendant la coupe suite à l'effet de torsion de la lame (M) et, d'autre part, de compenser le raccourcissement relativement axial par rapport au câble de la longueur dé-isolée à traiter.

8. Procédé selon la revendication 7, **caractérisé en ce que** la vitesse de coupe est définie et/ou variée en combinaison avec la compensation longitudinale du câble (K) par le jeu (S).

9. Procédé selon la revendication 7 ou 8, **caractérisé en ce que** le jeu axial par rapport au câble (S) est établi par un mouvement axial prédéterminé de la tête de coupe (SK) en direction des mâchoires de serrage (KB).

10. Procédé selon une des revendications 7 à 9, **caractérisé en ce que** la distance mutuelle (A) entre la lame (M) et les mâchoires de serrage (KB) est réduite automatiquement à raison du jeu axial par rapport au câble (S).

11. Procédé selon une des revendications 7 à 9, **caractérisé en ce que** la distance mutuelle (A) entre la lame (M) et les mâchoires de serrage (KB) est réduite pendant le processus de coupe à raison du jeu axial par rapport au câble (S) par système motorisé au moyen d'un organe de commande (MO) - éventuellement commandé par un dispositif de mesure de force (KM).
